# EUROPEAN PATENT SPECIFICATION

(11) **EP 3 738 867 B1**
(45) Date of publication and mention of the grant of the patent: **15.06.2022**
(21) Application number: 19174948.0
(22) Date of filing: 16.05.2019
(51) Int. Cl.: B62J 7/04, B62J 11/00, B62K 15/00

(54) **BICYCLE FRAME WITH ACCESSORY INTERFACE AND ACCESSORY CARRIER THEREFOR**
FAHRRADRAHMEN MIT ZUBEHÖRSCHNITTSTELLE UND ZUBEHÖRTRÄGER DAFÜR
CADRE DE BICYCLETTE AVEC INTERFACE D'ACCESSOIRE ET SUPPORT D'ACCESSOIRE ASSOCIÉ

(43) Date of publication of application: 18.11.2020
(73) Proprietor: Stella Fietsen B.V., 8072 PD Nunspeet (NL)
(72) Inventor: DE VISSER, Alexander Paul Johannus, 8076 PM Vierhouten (NL); VAN DEN HOORN, Daniël, 8071 BT Nunspeet (NL); VAN DER WONING, Mark Ronald, 8441 GE Heerenveen (NL)
(74) Representative: DeltaPatents B.V.

(56) References cited:
- EP-A2- 2 470 415
- DE-A1-102007 027 425
- US-A- 5 482 194

## Description

### FIELD OF THE INVENTION

The invention relates to a bicycle frame with an attachment interface for a removable accessory carrier and an accessory stay for supporting the carrier. The invention further relates to a removable accessory for attachment to the interface.

### BACKGROUND ART

Removable accessories such as a bag may be mounted to a bicycle via a mounting bracket that is arranged on e.g. the front handlebars. It is also known to attach mounting brackets to the seat post or seat stay of a bicycle, such as disclosed in WO 2013159141. Such mounting brackets are generally intended for lightweight accessories. In the case of an accessory for supporting relatively heavy loads, such as a child seat, the accessory would typically be mounted to e.g. the rear luggage carrier.

Safety regulations governing luggage carriers for bicycles, such as NEN-EN-ISO 11243, require that carriers for supporting loads in excess of 15 kg are supported by fixings to the bicycle frame close to the wheel axle. Typical bicycles often have a rear carrier with a horizontal frame section which is permanently attached to the bike frame at the seat post or at an upper region of the seat stays and via one or more supports that extend downwardly and are attached at a lower region of the seat stays close to the rear wheel axle. Removable luggage carriers are also well known in the art.

An example of folding bicycle rack is disclosed in US 54821 94, which shows the preambles of claims 1 and 6. The rack is formed from legs, which are secured at either side of the wheel, and rails which can be disassembled when the rack is not in use. In a storage position of the rack, the legs and rails are arranged at either side of the wheel, close to the seat stays.

There is still room for improvement.

### SUMMARY OF THE INVENTION

In a first aspect, the invention resides in a bicycle frame comprising an attachment interface for receiving a first connection element of an accessory carrier and an accessory stay for supporting the accessory carrier at an underside thereof. The frame has a wheel receiving structure comprising first and second legs interconnected at one end by a crown adapted to span an outer circumference of the bicycle wheel. An opposite end of each leg is adapted for supporting an axle of the wheel. The accessory stay has first and second uprights interconnected by a crossbar. According to the invention, a free end of each upright is pivotably attached to the frame at a connection point close to the wheel axle, so as to be movable between a storage position, in which the accessory stay bears against the wheel receiving structure, and a support position in which the accessory stay is pivoted away from the storage position, to enable the crossbar to support the underside of the accessory carrier.

Consequently, the bicycle can be provided with a removable accessory for supporting relatively heavy loads, supported on fixings close to the wheel axle, without the need for a permanent luggage carrier and without the need to attach a separate stay. Furthermore, when no accessory is mounted, the pivotably attached accessory stay of the invention can be stored in a straightforward manner, while maintaining a "sports" look of the bike.

According to the invention, the crown of the wheel receiving structure comprises a recessed portion for receiving the crossbar of the accessory stay, such that in the storage position, the accessory stay is at least partly accommodated within the wheel receiving structure, for optimal aesthetic appearance and aerodynamic performance. The first and second legs may also comprise a recessed surface against which the uprights of the accessory stay bear in the storage position.

In a first embodiment, the wheel receiving structure is adapted for a rear wheel and comprises a seat stay. The frame further comprises a chain stay, whereby the wheel axle is supported at a junction between first and second seat stay legs and corresponding first and second arms of the chain stay. The attachment interface is suitably provided on a rear-facing mounting surface of the frame, above the crown of the seat stay, at a junction between the seat stay and the seat tube.

The advantage of mounting the accessory carrier on a stationary part of the frame is that the supported load barely affects the handling and steering of the bicycle. However, the frame of present invention may also be equipped for attachment of an accessory carrier that extends over a front wheel of the bicycle. In a second embodiment, the wheel receiving structure is a wheel fork, whereby the attachment interface is provided on a forward-facing mounting surface, located above the crown of the wheel fork and below the head tube.

Suitably, the attachment interface comprises a housing that is connected to the frame mounting surface via e.g. bolts. Other types of fastening means may be employed. The housing is equipped with a support for receiving the first connection element of the accessory carrier and accommodates a spring-mounted lock slider having an opening through which a lock pin of the accessory carrier can be inserted.

An upper edge of the opening in the lock slider preferably has an angled guide surface configured such than when a leading edge of the lock pin is inserted into the opening, contact with the angled guide surface causes the lock slider to be moved in an upward direction. Suitably, a bottom end of the lock slider protrudes outside of the housing, such that the lock slider can be moved up manually, whereby the upward movement compresses a spring that is arranged between an upper surface of the lock slider and an opposing surface of the interface housing.

As mentioned, the lock slider is adapted to engage with a lock pin on the accessory carrier, for secure attachment of the carrier. In a further development, unwanted removal of the carrier, i.e. theft, is prevented. The attachment interface is provided with a locking mechanism with a retractable bar that extends over an uppermost surface of the lock slider, such that in retracted position upward movement of the lock slider is permitted and in extended position of the bar, upward movement of the lock slider is blocked.

An attachment interface as described above may also be provided on a forward-facing surface of the head tube that receives the front wheel fork. In this case, an accessory carrier for supporting a load of less than 15 kg can be mounted to the interface. As will be understood, such a carrier does not comprise a holder on its underside for attachment to the crossbar of an accessory stay, given that the wheel fork can be rotated within the head tube for steering bicycle.

In a further aspect, the invention relates to an accessory carrier which can be mounted to and dismounted from the inventive bicycle frame having a pivotably mounted accessory stay. The first connection element of the accessory carrier is provided at a first end of the carrier and is preferably executed as a hooking bar that fits into the support on the attachment interface, such that the accessory carrier is pivotable around an axis of the hooking bar. The hooking bar axis is generally parallel to the axis of the wheel over which the carrier mounted.

The first end of the inventive accessory carrier further comprises a lock pin, at a location below the hooking bar, whereby the lock pin has a notch that faces the hooking bar. The notched lock pin is adapted to engage in the opening in the lock slider of the attachment interface. Preferably, the notch is shaped to exactly receive the upper edge of the opening in the lock slider. At a second end of the carrier, the underside is provided with a holder that is shaped to receive the crossbar of an accessory stay.

Preferably, a base position of the lock pin is surrounded by a resilient element such as a bumper made of vibration dampening material, whereby in use of the carrier, the bumper makes contact with an outer surface of the attachment interface and is adapted to minimize rattling.

In a further development, the first end of the accessory carrier is further provided with a lip, which is arranged beneath the lock pin and which has a portion that extends in the same direction as the lock pin. A leading edge of said portion extends farther than a leading edge of the lock pin and a corresponding edge of the hooking bar. In use of the carrier, the leading edge of the lip portion extends into a space where the crossbar of the accessory stay is accommodated in the storage position. Thus, when the pivotable accessory stay on the inventive bicycle frame is in the storage position, it is not possible to fully insert the lock pin into the attachment interface. The lip feature therefore promotes proper mounting of the accessory carrier, whereby the crossbar of the accessory stay is moved to the support position to engage in the holder provided on the underside of the carrier, and the lock pin is fully inserted into the interface, such that the carrier is securely and safely attached.

These and other advantages of the invention will become apparent from the following detailed description and accompanying drawings.

### BRIEF DESCRIPTION OF THE DRAWINGS

The invention will now be further elucidated with reference to the embodiments described hereinafter. In the drawings,
- Fig. 1a: shows a side view of an embodiment of a bicycle frame with pivotably attached accessory stay according to the invention, mounted with a removable accessory carrier according to a further aspect of the invention;
- Fig. 1b: shows a perspective rear view of the frame and carrier depicted in Fig. 1a;
- Fig. 1c: shows a perspective rear view of the frame depicted in Fig. 1a, with the accessory carrier removed and accessory stay in stored position;
- Fig. 2a: shows a perspective front view of the accessory carrier depicted in Fig. 1a;
- Fig. 2b: shows a cross-sectional detail of the accessory carrier and accessory stay;
- Fig. 3a: shows a perspective view of main elements of an attachment interface for use on a frame according to the invention;
- Fig. 3b: shows a cross-sectional view of the attachment interface, prior to mounting of the accessory carrier;
- Fig. 3c: shows a cross-sectional view of the attachment interface, after mounting of the accessory carrier;
- Fig. 3d: shows a cross-sectional view of the attachment interface when it is attempted to mount the accessory carrier when the accessory stay is in a storage position.

It should be noted that items which have the same reference numbers in different figures, have the same structural features and the same functions. Where the function and/or structure of such an item has been explained, there is no necessity for repeated explanation thereof in the detailed description.

### DETAILED DESCRIPTION OF EMBODIMENTS

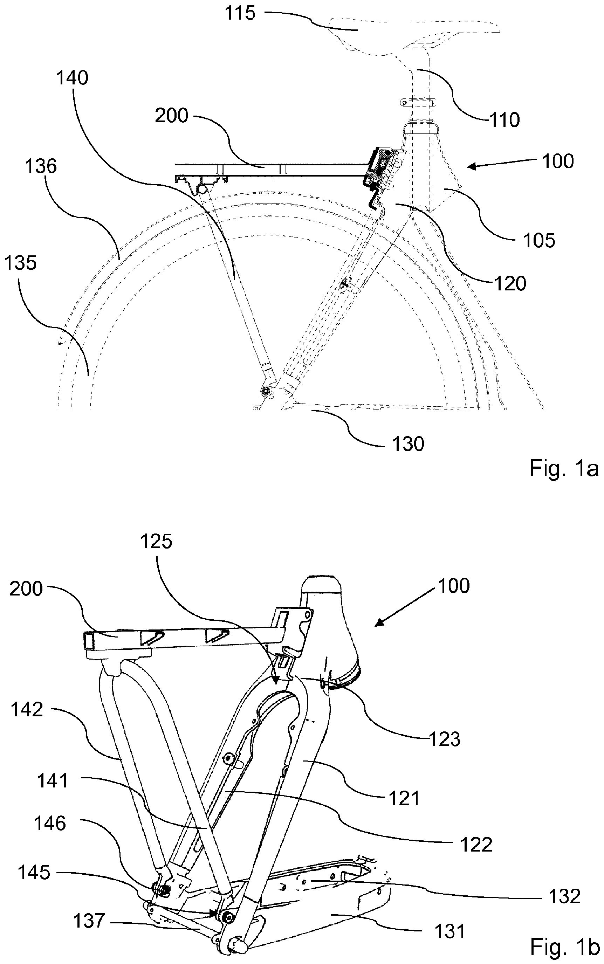

Fig. 1a shows a side view of an embodiment of a bicycle frame 100 according to the invention, provided with a removable accessory carrier 200 in accordance with a further aspect of the invention. With reference to Fig. 1b also, which shows a perspective view of parts of the inventive frame and accessory carrier, the frame 100 comprises a seat tube 105 for receiving a seat post 110 and saddle 115 of the bicycle, a seat stay 120 and a chain stay 130. The seat stay comprises first and second seat stay legs 121, 122 between which a rear wheel 135 of the bicycle is received. At an outer circumference of the wheel 135, the first and second legs are joined at a seat stay crown 123. The wheel is mounted on an axle 137 which is supported on the frame at a junction between the first and second seat stay legs 121, 122 and corresponding first and second arms 131, 132 of the chain stay 130.

The removable accessory carrier 200 is mounted to the frame at a first location via an attachment interface, which in the depicted embodiment is arranged on a rear-facing mounting surface 127 of the frame, at a junction between the seat tube 105 and the seat stay 120, somewhat above the crown 123 of the seat stay which spans the outer circumference of the wheel 135 or fender 136, if present (indicated in figure with dotted lines). The mounting of the carrier 200 at the attachment interface will be described in more detail later. The accessory carrier is designed to support a load of greater than 15 kg up to a maximum load of at least 27 kg in accordance with NEN-EN-ISO 12243. This regulation requires that the accessory carrier is additionally supported by fixings to the frame close to the wheel axle 137.

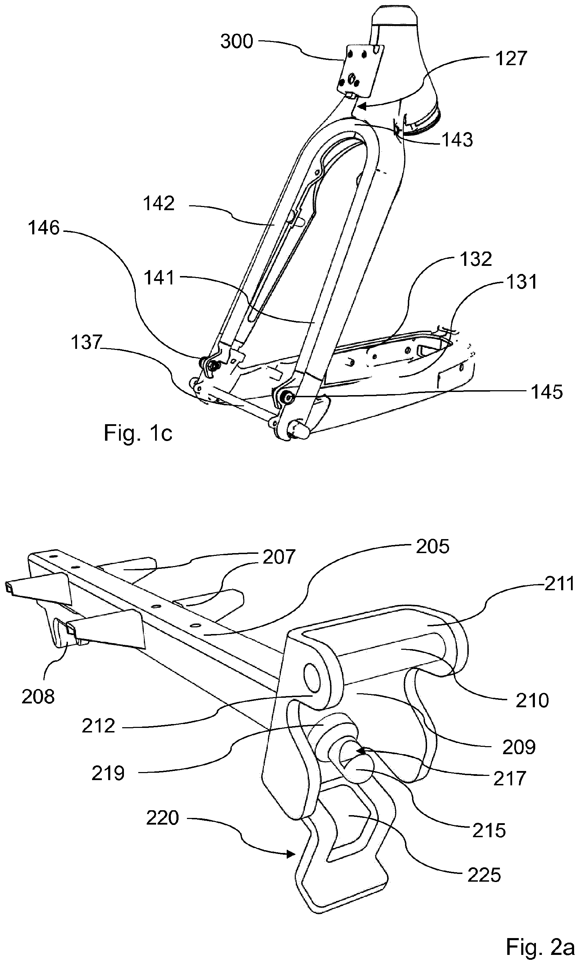

The frame is therefore equipped with an accessory stay 140 for supporting an underside of the accessory carrier at a further attachment location towards the rear of the carrier 200. According to the invention, the accessory stay is pivotably attached to frame, close to the rear wheel axle 137, such that the stay can be moved between a support position as shown in Fig. 1a and Fig. 1b and a storage position, as depicted in Fig. 1c, which shows a perspective view of the frame without the carrier.

The accessory stay 140 is generally U-shaped and has a first upright 141 and a second upright 142 interconnected by a crossbar 143 which extends over the outer circumference of the bicycle wheel 135 or fender 136. Preferably, the accessory stay is executed as a single piece, but may also be formed from two separate uprights and a separate crossbar which are e.g. screwed together. At a free end of each upright 141, 142 a connection point is provided for pivotably attaching the accessory stay 140 to the frame at a corresponding connection point 145, 146 located close to the junction between each seat stay leg 121, 122 and the corresponding chain stay arm 131, 132. Suitably, the seat stay comprises a recessed portion 125 that is shaped to receive the accessory stay 140, such that in the storage position, the accessory stay 140 is neatly housed for optimal aerodynamics and aesthetic appearance. The first and second legs 121, 122 and the crown 123 of the seat stay preferably comprise a recessed surface with a depth that enables the accessory stay 140 to be at least partially housed within the seat stay 120. The recessed portion 125 provides a backstop at least for the crossbar 143 of the accessory stay, whereby the surface against which the crossbar bears is recessed with respect to the mounting surface 127 of the frame on which the attachment interface 300 is arranged (refer Fig. 1c). The attachment interface is adapted to receive and support a front end of the removable accessory carrier, which will be referred to as the first end.

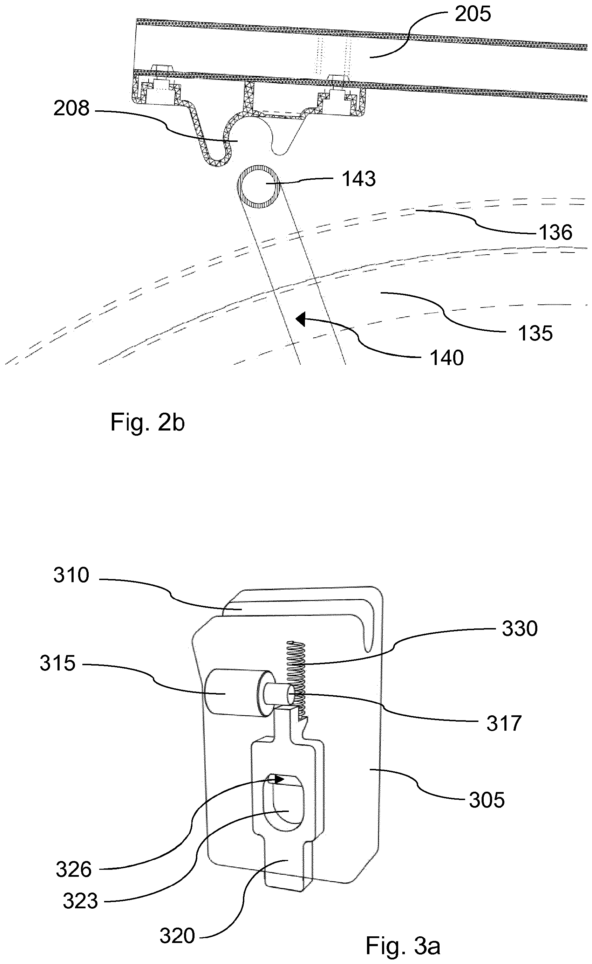

A perspective view of an embodiment of the inventive accessory carrier is shown in Fig 2a. The carrier 200 has a longitudinal extension 205 and transverse beam portions 207 for supporting or attaching an accessory such as a basket or a child seat. Towards the rear end (second end) of the carrier, an underside thereof is provided with a holder 208 for receiving the accessory stay. A cross-sectional detail of the second end of the carrier is shown in Fig. 2b, prior to mounting on the accessory stay. Suitably, the holder 208 is formed by a recess that is shaped to receive the crossbar 143 of the accessory stay. In the depicted embodiment, the accessory stay has a tubular geometry and the holder 208 has a C-shaped cross-section. Other complementary geometries are of course possible. Preferably, the holder is shaped to receive the crossbar 143 with a slight interference fit.

The first end of the inventive carrier 200 comprises a mounting plate 209, having first and second protrusions 211, 212 that extend from an upper region of the plate, at either side thereof. The protrusions support a first connection element 210 in the form of a hooking bar that is adapted to be suspended on the attachment interface 300.

Main components of the attachment interface 300 are shown in Fig. 3a. The interface comprises a housing 305 that is connected to the frame mounting surface 127, which is located above the seat stay crown 123, at the junction of the seat tube 105 and seat stay 120 in the present embodiment. The frame may be provided with a dedicated recess for receiving the housing. The components of the interface may also be integrated directly within the frame.

An upper side of the housing is provided with a support for the accessory carrier in the form of a semi-cylindrical channel 310 for receiving the hooking bar 210 of the carrier. Spaced C-shaped brackets could also be used. The attachment interface 300 of this embodiment is furthermore equipped with a locking arrangement for both securely attaching the carrier to the interface and enabling locking, to prevent theft.

The housing 305 accommodates a cylinder lock 315 and a lock slider 320 that is moveable up and down within the housing and which is urged into a locking position by a spring 330 or other suitable resilient means. In Fig. 3a, the housing has been drawn as transparent, to reveal the main components.

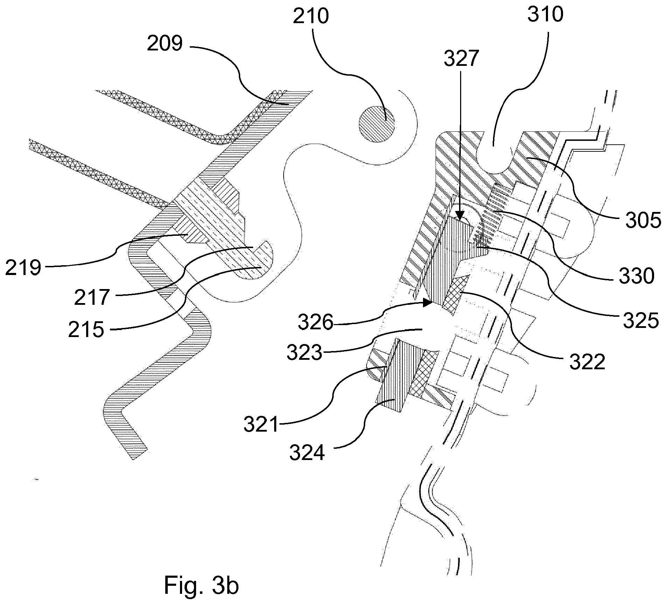

A more detailed cross-sectional view of the interface and the first end of the accessory carrier 200, prior to mounting, is shown in Fig. 3b. The lock slider 320 has an opening 323 and is held within the housing between first and second guide plates 321, 322 which are fixed relative to the housing 305. The first guide plate 321 may be made of a material such as PTFE to facilitate the sliding movement of the lock slider 320, which may be made from steel. The second guide plate 322 may be made from a polymer material such as polyamide, which is also a relatively low-friction material. The housing and the first and second guide plates are likewise provided with an opening in alignment with the opening 323 in the lock slider 320, depending on its position. The aforementioned openings are adapted to enable insertion of a lock pin 215 that extends from the mounting plate 209 of the accessory carrier 200, beneath the hooking bar 210.

When the accessory carrier 200 is to be mounted, the first step is to insert the hooking bar 210 into the channel 310 in the interface housing 305. The carrier is then rotated downwards until the lock pin 215 enters the openings within the interface 300. A bottom end 324 of the lock slider 320 protrudes outside of the housing (refer Fig. 3a). An upper region of the lock slider has a shelf 325 that extends over the second guide plate 322 and which has an upwardly extending protrusion around which a lower end of the spring 330 is arranged. An upper end of the spring bears against a surface of the housing 305. When the spring 330 is not compressed, an underside of the shelf 325 on the lock slider preferably bears against a top side of the second guide plate 322. When the lock slider is moved upwards, the spring 330 is compressed and the opening 323 in the lock slider is in alignment with the opening in the second guide plate 322, as shown in Fig. 3b.

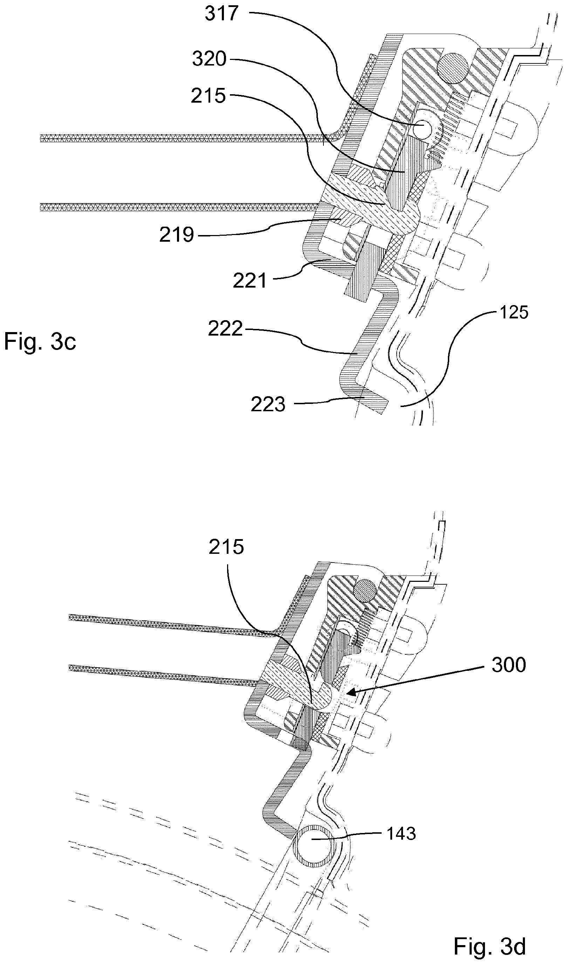

The lock slider may be moved upwards by pressing on the bottom end 324 of the slider. The upward movement is preferably achieved without direct manual activation of the bottom region of the slider. Suitably, an upper edge of the opening 323 in the lock slider has an angled guide surface 326. When the spring is in decompressed position, the angled guide surface protrudes beyond the opening in the first guide plate 321 and in the housing. When a leading edge of the lock pin 215 on the accessory carrier makes contact with the angled guide surface 326, further rotation around an axis of the hooking bar 210 will automatically cause the lock slider to be moved upwards and the spring 330 compressed. Suitably, the lock pin 215 is provided with a notch 217 that is complementarily shaped relative to the geometry of the upper edge of the lock slider opening 323. Thus, when the carrier is rotated to a fully inserted position and the notch 217 is in alignment with the upper edge of the lock slider opening, the spring 330 urges the lock slider 320 downwards to engage in the notch, as shown in Fig. 3c.

Preferably, a base portion of the lock pin 215 is surrounded by a resilient element, e.g. a bumper 219 made of rubber, such that in the fully inserted position, the bumper is in contact with the mounting plate 209 of the carrier and an external surface of the housing 305. The advantage of the rubber bumper is that rattling is suppressed. The bumper may be made of any other suitable vibration-dampening material.

When the carrier is to be removed, the bottom end 324 of the lock slider is pressed upwards, to release it from the notch 217, and the carrier can be rotated upwards until the entire lock pin 215 is free of the interface 300. To prevent unwanted removal, i.e. theft of the carrier, the interface is preferably equipped with a cylinder lock, as mentioned earlier.

With reference to Fig. 3a, the cylinder lock 315 is shown in a locked position, in which a retractable bar 317 protrudes from the main body of the lock. The spring 330 is in a decompressed position and the bar 317 protrudes over an uppermost surface 327 of the lock slider 320, to prevent upward movement of the lock slider out of the notch in the lock pin that would enable its removal. In the open position of the lock, when the bar 317 is retracted, upward movement of the lock slider is possible, enabling the carrier to be removed.

In a further development, the mounting portion at the first end of the accessory carrier and the bicycle frame with interface are adapted such that it is not possible to properly mount the carrier to the interface if the accessory stay is in the stored position.

With reference to Fig. 2a and Fig. 3c, the first end of the carrier comprises a Z-shaped lip 220, which has a first section 221 that extends from the mounting plate 209 in a direction parallel to the lock pin 215, at lower region of the mounting plate. A second section 222 of the lip extends downward from the first section 221, in a generally perpendicular direction, and a third section 223 of the lip extends from the second section 222 in a direction parallel to the first section 221, such that a leading edge of the third section extends further than the leading edge of the notched lock pin and a corresponding leading edge of the hooking bar 210. Suitably, the first and second sections of the lip comprise and opening 225 to accommodate the bottom end 324 of the lock slider that protrudes out of the interface housing 305.

The third section 223 of the lip is adapted to extend into the recess 125 in the seat stay 120 which receives the crossbar 143 of the accessory stay in its stored position. The lip 220 therefore prevents full insertion of the lock pin 215 into the attachment interface 300 when the stay crossbar 143 is located in the recess, as shown in Fig. 3d. Proper mounting of the accessory carrier is therefore promoted and safety is thereby enhanced.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

In the device claim enumerating several means, several of these means may be embodied by one and the same item of hardware.

### Reference numerals

- 100: bicycle frame
- 105: seat tube
- 110: seat post
- 115: saddle
- 120: seat stay
- 121, 122: 1^{st} and 2^{nd} legs of seat stay
- 123: seat stay crown
- 125: recessed portion of seat stay and crown
- 127: mounting surface on seat crown
- 130: chain stay
- 131, 132: 1^{st} and 2^{nd} arms of chain stay
- 135: wheel
- 136: fender
- 137: wheel axle
- 140: accessory stay
- 141, 142: 1^{st} and 2^{nd} uprights of accessory stay
- 143: crossbar of accessory stay
- 145, 146: 1^{st} and 2^{nd} pivotable connection points of accessory stay
- 200: accessory carrier
- 205: longitudinal extension
- 207: transverse support beams
- 208: holder for crossbar of accessory stay
- 209: mounting plate at 1^{st} end of carrier
- 210: 1^{st} connection element (hooking bar)
- 211, 212: 1^{st} and 2^{nd} protrusions which support the hooking bar
- 215: lock pin
- 217: notch in lock pin
- 219: rubber bumper/resilient element
- 220: lip of accessory carrier
- 221, 222, 223: 1^{st}, 2^{nd} and 3^{rd} portions of lip
- 225: opening in lip
- 300: accessory attachment interface
- 305: housing
- 310: channel for receiving hooking bar
- 315: cylinder lock
- 317: retractable bar of cylinder lock
- 320: lock slider
- 321, 322: 1^{st} and 2^{nd} guide plates
- 323: opening in lock slider
- 324: bottom part of lock slider that protrudes outside of housing
- 325: shelf on lock slider that extends over 2^{nd} guide plate
- 326: angled guide surface at upper edge of lock slider opening
- 327: uppermost surface of lock slider
- 330: spring

## Claims

1. Bicycle frame comprising an attachment interface (300) for receiving a first connection element (210) of an accessory carrier (200), and an accessory stay (140) for supporting the accessory carrier at an underside thereof, wherein:
• the frame (100) has a wheel receiving structure (120) comprising first and second legs (121, 122) interconnected at one end by a crown (123) adapted to span an outer circumference of a bicycle wheel (135), whereby an opposite end of each leg is adapted for supporting an axle (137) of the wheel;
• the accessory stay (140) has first and second uprights (141, 142) interconnected by a crossbar (143), whereby a free end of each upright is pivotably attached to the frame at a connection point (145, 146) close to the wheel axle, such that the accessory stay (140) is pivotable between a storage position, in which the accessory stay bears against the wheel receiving structure (120), and a support position in which the accessory stay is pivoted away from the storage position, to enable the crossbar (143) to support the underside of the accessory carrier
**characterized in that:**
the crown (123) comprises a recessed portion (125), such that in the storage position, the accessory stay (140) is at least partly accommodated within the wheel receiving structure (120).

2. Bicycle frame according to claim 1, wherein the attachment interface comprises a support (310) for receiving the first connection element being a hooking bar (210) of the accessory carrier, such that the carrier is pivotable around an axis of the hooking bar, and further comprises a spring-mounted lock slider (320) having an opening (323) through which a lock pin (215) of the accessory carrier can be inserted.

3. Bicycle frame according to claim 2, wherein an upper edge of the opening (323) has an angled guide surface (326) configured such than when a leading edge of the lock pin is inserted into the opening (323), contact with the angled guide surface (326) causes the lock slider (320) to be moved in an upward direction.

4. Bicycle frame according to 2 or 3, wherein upward movement of the lock slider compresses a spring (330) that is arranged between an upper surface of the lock slider (320) and an opposing surface of a housing (305) of the interface (300) and wherein a bottom end (324) of the lock slider protrudes outside the housing.

5. Bicycle frame according to any of claims 2 to 4, wherein the interface (300) is further provided with a locking mechanism (315) comprising a retractable bar (317) that extends over an uppermost surface (327) of the lock slider (320), such that in retracted position upward movement of the lock slider is permitted and in extended position of the bar, upward movement of the lock slider is blocked.

6. Accessory carrier for removable attachment to a bicycle frame according to any of claims 1 to 5, **characterized in that** a first end of the carrier (200) comprises a mounting plate (209) and a first connection element (210) adapted for suspension in a corresponding support (310) of the attachment interface (300) provided on the bicycle frame, the accessory carrier further comprising a lock pin (215) that extends from the mounting plate (209) at a location below the first connection element (210), whereby an upper surface of the lock pin is provided with a notch (217), and wherein an underside of the carrier (200), towards a second end thereof, is provided with a holder (208) that is shaped to receive the crossbar (143) of the accessory stay (140) of the bicycle frame.

7. Accessory carrier according to claim 6, wherein a base portion of the lock pin (215) is surrounded by a bumper (219) made of vibration dampening material, wherein the bumper is adapted to contact an exterior surface of the attachment interface (300).

8. Accessory carrier according to claim 6 or 7, further comprising a lip (220) that extends from a lower region of the mounting plate (209), below the lock pin (215), the lip having a portion (223) that extends in the same direction as the lock pin, whereby the a leading edge of said portion (223) extends farther than a leading edge of the lock pin.

9. Accessory carrier according to claim 8, wherein the lip (220) comprises a first portion (221) that extends from the carrier mounting plate (209), a second portion (222) than extends downwardly therefrom and a third portion (223) that extends from the second portion in the same direction as the lock pin, whereby the leading edge of the third portion (223) extends beyond the leading edge of the lock pin (215).

10. Accessory carrier according to claim 9, wherein the first and second portions (221, 222) of the lip comprise an opening (225) at a location in alignment with the notch (217) in the lock pin and wherein the first connection element is a hooking bar (210) which has an axis that is essentially parallel to an axis of the wheel over which the accessory carrier (220) is adapted to be mounted.

11. A bicycle frame according to any of claims 1 to 5, wherein the accessory stay (140) is arranged in the support position and an accessory carrier according to any of claims 6 to 10 is mounted to the frame (100), at the accessory stay and at the attachment interface (300).

12. Bicycle frame according to claim 11, dependent on any of claims 2 to 5, wherein the notch (217) in the lock pin (215) of the accessory carrier (200) has a complementary shape relative to the upper edge of the opening (323) in the lock slider (320), such that in fully inserted position, the lock slider is engaged in the notch.

13. Bicycle frame according to claim 12, wherein the accessory carrier is according to claim 8, wherein the leading edge of the lip portion (223) extends into a space where the crossbar (143) of the accessory stay (140) is accommodated when the stay is in the storage position, such that full insertion of the lock pin (215) into the attachment interface (300) is prevented when the stay is in the storage position.

14. Bicycle frame according to any of claims 1 to 5 or 11 to 13, wherein the wheel receiving structure comprises a seat stay (120) and the accessory interface is mounted on a rear-facing surface (127) at a junction between the seat stay and a seat tube of the frame.

## Patentansprüche

1. Fahrradrahmen, umfassend eine Befestigungsschnittstelle (300) zum Aufnehmen eines ersten Verbindungselements (210) eines Zubehörträgers (200), und eine Zubehörstrebe (140) zum Stützen des Zubehörträgers an einer Unterseite davon, wobei:
- der Rahmen (100) eine Radaufnahmestruktur (120) aufweist, die erste und zweite Schenkel (121, 122) umfasst, die an einem Ende durch einen Kranz (123) miteinander verbunden sind, der angepasst ist, um einen Außenumfang eines Fahrradrades (135) zu umspannen, wodurch ein gegenüberliegendes Ende eines jeden Schenkels zum Stützen einer Achse (137) des Rades angepasst ist;
- die Zubehörstrebe (140) erste und zweite Holme (141, 142) aufweist, die durch eine Querstange (143) miteinander verbunden sind, wodurch ein freies Ende eines jeden Holms schwenkbar an dem Rahmen an einem Verbindungspunkt (145, 146) nahe der Radachse befestigt ist, sodass die Zubehörstrebe (140) zwischen einer Aufbewahrungsposition, in der die Zubehörstrebe an der Radaufnahmestruktur (120) anliegt, und einer Stützposition, in der die Zubehörstrebe aus der Aufbewahrungsposition weggeschwenkt ist, schwenkbar ist, um es der Querstange (143) zu ermöglichen, die Unterseite des Zubehörträgers zu stützen
**dadurch gekennzeichnet, dass:**
der Kranz (123) einen eingelassenen Abschnitt (125) umfasst, sodass die Zubehörstrebe (140) in der Aufbewahrungsposition mindestens teilweise innerhalb der Radaufnahmestruktur (120) untergebracht ist.

2. Fahrradrahmen nach Anspruch 1, wobei die Befestigungsschnittstelle eine Stütze (310) zum Aufnehmen des ersten Verbindungselements, das eine Einhängestange (210) des Zubehörträgers ist, umfasst, sodass der Träger um eine Achse der Einhängestange herum schwenkbar ist, und weiter einen federnd gelagerten verriegelbaren Schieber (320) umfasst, der eine Öffnung (323) aufweist, durch die hindurch ein Sicherungsstift (215) des Zubehörträgers eingeführt werden kann.

3. Fahrradrahmen nach Anspruch 2, wobei eine Oberkante der Öffnung (323) eine abgewinkelte Führungsoberfläche (326) aufweist, die konfiguriert ist, sodass, wenn eine Vorderkante des Sicherungsstifts in die Öffnung (323) eingeführt wird, ein Kontakt mit der abgewinkelten Führungsoberfläche (326) bewirkt, dass sich der verriegelbare Schieber (320) in eine Aufwärtsrichtung bewegt.

4. Fahrradrahmen nach Anspruch 2 oder 3, wobei eine Aufwärtsbewegung des verriegelbaren Schiebers eine Feder (330) zusammendrückt, die zwischen einer oberen Oberfläche des verriegelbaren Schiebers (320) und einer gegenüberliegenden Oberfläche eines Gehäuses (305) der Schnittstelle (300) angeordnet ist, und wobei ein unteres Ende (324) des verriegelbaren Schiebers aus dem Gehäuse hervorsteht.

5. Fahrradrahmen nach einem der Ansprüche 2 bis 4, wobei die Schnittstelle (300) weiter mit einem Sicherungsmechanismus (315) versehen ist, der eine einziehbare Stange (317) umfasst, die sich über eine oberste Oberfläche (327) des verriegelbaren Schiebers (320) erstreckt, sodass in der eingezogenen Position eine Aufwärtsbewegung des verriegelbaren Schiebers erlaubt ist, und in der erstreckten Position der Stange eine Aufwärtsbewegung des verriegelbaren Schiebers gesperrt ist.

6. Zubehörträger zur lösbaren Befestigung an einem Fahrradrahmen nach einem der Ansprüche 1 bis 5, **dadurch gekennzeichnet, dass** ein erstes Ende des Trägers (200) eine Montageplatte (209) und ein erstes Verbindungselement (210) umfasst, das zum Aufhängen in einer entsprechenden Stütze (310) der Befestigungsschnittstelle (300) angepasst ist, die auf dem Fahrradrahmen vorgesehen ist, wobei der Zubehörträger weiter einen Sicherungsstift (215) umfasst, der sich von der Montageplatte (209) an einer Stelle unter dem ersten Verbindungselement (210) erstreckt, wodurch eine obere Oberfläche des Sicherungsstifts mit einer Kerbe (217) versehen ist, und wobei eine Unterseite des Trägers (200), zu einem zweiten Ende davon, mit einem Halter (208) versehen ist, der geformt ist, um die Querstange (143) der Zubehörstrebe (140) des Fahrradrahmens aufzunehmen.

7. Zubehörträger nach Anspruch 6, wobei ein Grundabschnitt des Sicherungsstifts (215) von einem Stoßfänger (219) umgeben ist, der aus schwingungsdämpfendem Material gefertigt ist, wobei der Stoßfänger angepasst ist, um eine Außenoberfläche der Befestigungsschnittstelle (300) zu berühren.

8. Zubehörträger nach Anspruch 6 oder 7, weiter eine Lippe (220) umfassend, die sich aus einem unteren Bereich der Montageplatte (209), unter dem Sicherungsstift (215) erstreckt, wobei die Lippe einen Abschnitt (223) aufweist, der sich in derselben Richtung wie der Sicherungsstift erstreckt, wodurch sich eine Vorderkante des Abschnitts (223) weiter erstreckt, als eine Vorderkante des Sicherungsstifts.

9. Zubehörträger nach Anspruch 8, wobei die Lippe (220) einen ersten Abschnitt (221) umfasst, der sich von der Trägermontageplatte (209) erstreckt, ein zweiter Abschnitt (222) sich dann nach unten davon erstreckt, und einen dritten Abschnitt (223), der sich von dem zweiten Abschnitt in derselben Richtung wie der Sicherungsstift erstreckt, wodurch sich die Vorderkante des dritten Abschnitts (223) über die Vorderkante des Sicherungsstifts (215) hinweg erstreckt.

10. Zubehörträger nach Anspruch 9, wobei der erste und zweite Abschnitt (221,222) der Lippe eine Öffnung (225) an einer Stelle in Ausrichtung mit der Kerbe (217) in dem Sicherungsstift umfassen, und wobei das erste Verbindungselement eine Einhängestange (210) ist, die eine Achse aufweist, die im Wesentlichen parallel zu einer Achse des Rades verläuft, über der der Zubehörträger (220) angepasst ist montiert zu werden.

11. Fahrradrahmen nach einem der Ansprüche 1 bis 5, wobei die Zubehörstrebe (140) in der Stützposition angeordnet ist, und ein Zubehörträger nach einem der Ansprüche 6 bis 10 an dem Rahmen (100) an der Zubehörstrebe und an der Befestigungsschnittstelle (300) montiert ist.

12. Fahrradrahmen nach Anspruch 11, in Abhängigkeit von einem der Ansprüche 2 bis 5, wobei die Kerbe (217) in dem Sicherungsstift (215) des Zubehörträgers (200) eine ergänzende Form zu der Oberkante der Öffnung (323) in dem verriegelbaren Schieber (320) aufweist, sodass der verriegelbare Schieber in der voll eingeführten Position in die Kerbe eingeführt ist.

13. Fahrradrahmen nach Anspruch 12, wobei der Zubehörträger nach Anspruch 8 ist, wobei sich die Vorderkante des Lippenabschnitts (223) in einen Raum erstreckt, in dem die Querstange (143) der Zubehörstrebe (140) untergebracht ist, wenn die Strebe in der Aufbewahrungsposition ist, sodass eine volle Einführung des Sicherungsstifts (215) in die Befestigungsschnittstelle (300) unterbunden wird, wenn die Strebe in der Aufbewahrungsposition ist.

14. Fahrradrahmen nach einem der Ansprüche 1 bis 5 oder 11 bis 13, wobei die Radaufnahmestruktur eine Sitzstrebe (120) umfasst und die Zubehörschnittstelle an einer rückwärtsgewandten Oberfläche (127) an einer Verbindungsstelle zwischen der Sitzstrebe und einem Sitzrohr des Rahmens montiert ist.

## Revendications

1. Cadre de vélo comprenant une interface de fixation (300) destinée à recevoir un premier élément de connexion (210) d'un porte-accessoire (200), et un renfort d'accessoire (140) destiné à supporter le porte-accessoire au niveau d'une face inférieure de celui-ci, dans lequel :
- le cadre (100) présente une structure de réception de roue (120) comprenant des première et seconde pattes (121, 122) reliées entre elles au niveau d'une extrémité par une couronne (123) conçue pour s'étendre sur une circonférence externe d'une roue de vélo (135), selon lequel une extrémité opposée de chaque patte est conçue pour supporter un axe (137) de la roue ;
- le renfort d'accessoire (140) présente des premier et second montants (141, 142) reliés entre eux par une barre transversale (143), selon laquelle une extrémité libre de chaque montant est fixée de manière pivotante au cadre en un point de connexion (145, 146) à proximité de l'axe de roue, de sorte que le renfort d'accessoire (140) puisse pivoter entre une position rangée, dans laquelle le renfort d'accessoire repose contre la structure de réception de roue (120), et une position de support dans laquelle le renfort d'accessoire est écarté par pivotement de la position rangée, pour permettre à la barre transversale (143) de supporter la face inférieure du porte-accessoire
**caractérisé en ce que** :
la couronne (123) comprend une portion en retrait (125), de sorte que dans la position rangée, le renfort d'accessoire (140) soit au moins partiellement logé dans la structure de réception de roue (120).

2. Cadre de vélo selon la revendication 1, dans lequel l'interface de fixation comprend un support (310) destiné à recevoir le premier élément de connexion étant une barre d'accrochage (210) du porte-accessoire, de sorte que le porte-accessoire puisse pivoter autour d'un axe de la barre d'accrochage, et comprend en outre une glissière de verrouillage à ressort (320) présentant une ouverture (323) à travers laquelle une goupille de verrouillage (215) du porte-accessoire peut être insérée.

3. Cadre de vélo selon la revendication 2, dans lequel un bord supérieur de l'ouverture (323) présente une surface de guidage inclinée (326) configurée de sorte que lorsqu'un bord d'attaque de la goupille de verrouillage est inséré dans l'ouverture (323), le contact avec la surface de guidage inclinée (326) amène la glissière de verrouillage (320) à être déplacée dans une direction ascendante.

4. Cadre de vélo selon la revendication 2 ou 3, dans lequel un mouvement ascendant de la glissière de verrouillage comprime un ressort (330) qui est agencé entre une surface supérieure de la glissière de verrouillage (320) et une surface opposée d'un logement (305) de l'interface (300) et dans lequel une extrémité inférieure (324) de la glissière de verrouillage fait saillie à l'extérieur du logement.

5. Cadre de vélo selon l'une quelconque des revendications 2 à 4, dans lequel l'interface (300) est en outre dotée d'un mécanisme de verrouillage (315) comprenant une barre rétractable (317) qui s'étend sur la surface la plus élevée (327) de la glissière de verrouillage (320), de sorte qu'en position rétractée un mouvement ascendant de la glissière de verrouillage soit permis et qu'en position déployée de la barre, un mouvement ascendant de la glissière de verrouillage soit empêché.

6. Porte-accessoire destiné à être fixé amovible à un cadre de vélo selon l'une quelconque des revendications 1 à 5, **caractérisé en ce qu'**une première extrémité du porte-accessoire (200) comprend une plaque de montage (209) et un premier élément de connexion (210) conçu pour être suspendu dans un support correspondant (310) de l'interface de fixation (300) fournie sur le cadre de vélo, le porte-accessoire comprenant en outre une goupille de verrouillage (215) qui s'étend depuis la plaque de montage (209) en un emplacement sous le premier élément de connexion (210), selon lequel une surface supérieure de la goupille de verrouillage est dotée d'une encoche (217), et dans lequel une face inférieure du porte-accessoire (200), vers une seconde extrémité de celui-ci, est dotée d'un élément de retenue (208) qui est façonné pour recevoir la barre transversale (143) du renfort d'accessoire (140) du cadre de vélo.

7. Porte-accessoire selon la revendication 6, dans lequel une portion de base de la goupille de verrouillage (215) est entourée d'un amortisseur (219) composé d'un matériau amortissant les vibrations, dans lequel l'amortisseur est conçu pour entrer en contact avec une surface extérieure de l'interface de fixation (300).

8. Porte-accessoire selon la revendication 6 ou 7, comprenant en outre une lèvre (220) qui s'étend depuis une région inférieure de la plaque de montage (209), sous la goupille de verrouillage (215), la lèvre présentant une portion (223) qui s'étend dans la même direction que la goupille de verrouillage, selon laquelle un bord d'attaque de ladite portion (223) s'étend plus loin qu'un bord d'attaque de la goupille de verrouillage.

9. Porte-accessoire selon la revendication 8, dans lequel la lèvre (220) comprend une première portion (221) qui s'étend depuis la plaque de montage de porte-accessoire (209), une deuxième portion (222) qui s'étend vers le bas depuis celle-ci et une troisième portion (223) qui s'étend depuis la deuxième portion dans la même direction que la goupille de verrouillage, selon laquelle le bord d'attaque de la troisième portion (223) s'étend au-delà du bord d'attaque de la goupille de verrouillage (215).

10. Porte-accessoire selon la revendication 9, dans lequel les première et deuxième portions (221, 222) de la lèvre comprennent une ouverture (225) en un emplacement aligné sur l'encoche (217) dans la goupille de verrouillage et dans lequel le premier élément de connexion est une barre d'accrochage (210) qui présente un axe qui est quasiment parallèle à un axe de la roue sur lequel le porte-accessoire (220) est conçu pour être monté.

11. Un cadre de vélo selon l'une quelconque des revendications 1 à 5, dans lequel le renfort d'accessoire (140) est agencé dans la position de support et un porte-accessoire selon l'une quelconque des revendications 6 à 10 est monté sur le cadre (100), au niveau du renfort d'accessoire et au niveau de l'interface de fixation (300).

12. Cadre de vélo selon la revendication 11, dépendante de l'une quelconque des revendications 2 à 5, dans lequel l'encoche (217) dans la goupille de verrouillage (215) du porte-accessoire (200) présente une forme complémentaire par rapport au bord supérieur de l'ouverture (323) dans la glissière de verrouillage (320), de sorte qu'en position complètement insérée, la glissière de verrouillage soit en prise dans l'encoche.

13. Cadre de vélo selon la revendication 12, dans lequel le porte-accessoire est conforme à la revendication 8, dans lequel le bord d'attaque de la portion de lèvre (223) s'étend dans un espace où la barre transversale (143) du renfort d'accessoire (140) est logée lorsque le renfort se trouve dans la position rangée, de sorte que l'insertion totale de la goupille de verrouillage (215) dans l'interface de fixation (300) soit empêchée lorsque le renfort se trouve dans la position rangée.

14. Cadre de vélo selon l'une quelconque des revendications 1 à 5 ou 11 à 13, dans lequel la structure de réception de roue comprend un hauban (120) et l'interface d'accessoire est montée sur une surface orientée vers l'arrière (127) au niveau d'une jonction entre le hauban et une tige de selle du cadre.
